(19) Europäisches Patentamt

European Patent Office

Office européen des brevets

(11) Veröffentlichungsnummer: **0 347 549 B1**

(12) # EUROPÄISCHE PATENTSCHRIFT

(45) Veröffentlichungstag der Patentschrift: **25.11.92**

(21) Anmeldenummer: **89107115.1**

(22) Anmeldetag: **20.04.89**

(51) Int. Cl.5: **F16C 13/00**, D21G 1/02

(54) **Walze mit steuerbarem Liniendruck.**

(30) Priorität: **22.06.88 DE 3820974**

(43) Veröffentlichungstag der Anmeldung:
**27.12.89 Patentblatt 89/52**

(45) Bekanntmachung des Hinweises auf die
Patenterteilung:
**25.11.92 Patentblatt 92/48**

(84) Benannte Vertragsstaaten:
**CH FR GB IT LI SE**

(56) Entgegenhaltungen:
**EP-A- 0 252 251      DE-A- 2 230 139**
**DE-A- 2 907 761      DE-A- 3 640 902**
**DE-A- 3 640 903      FR-A- 2 298 643**
**GB-A- 2 029 932      US-A- 4 570 314**

(73) Patentinhaber: **Eduard Küsters Maschinenfabrik GmbH & Co. KG
Gladbacher Strasse 457
W-4150 Krefeld 1(DE)**

(72) Erfinder: **Schrörs, Günter
Corneliusstrasse 29
W-4154 Tönisvorst 1(DE)**
Erfinder: **Küsters, Karl-Heinz
Hermann-Schumacher-Strasse 49
W-4150 Krefeld(DE)**

(74) Vertreter: **Palgen, Peter, Dipl.-Phys. Dr.
Mulvanystrasse 2
W-4000 Düsseldorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Walze der dem Oberbegriff des Anspruchs 1 entsprechenden Art.

Eine derartige Walze gehört durch die vorveröffentlichte DE-A-36 40 903 zum Stand der Technik. Die wesentliche Eigenschaft der in den zum Stand der Technik gehörenden walzen angeordneten Dichtungsglieder besteht darin, daß sie sowohl als Überdruckelemente als auch als Unterdruckelemente arbeiten können. Damit ist folgendes gemeint: der Zwischenraum zwischen dem Querhaupt und dem Innenumfang der Hohlwalze außerhalb der Dichtungsglieder kann leer oder mit Druckflüssigkeit unter einem bestimmten Druck gefüllt sein. Wenn dann die von der Druckflüssigkeit in der Druckkammer eines Dichtungsgliedes gegen den Innenumfang der Hohlwalze ausgeübte Kraft größer ist als die bei Nichtvorhandensein des Dichtungsgliedes gegen die entsprechende Querschnittsfläche des Innenumfangs der Hohlwalze ausgeübte Kraft, so arbeitet das Dichtungsglied als Überdruckelement. Es übt also in seinem Wirkungsquerschnitt lokal gegen den Innenumfang der Hohlwalze einen größeren Druck aus, als er in der Umgebung vorliegt, und arbeitet wie ein Stützelement nach der DE-A-22 30 139. Der andere Betriebsfall, bei welchem das Dichtungsglied als Unterdruckelement arbeitet, liegt vor, wenn der Zwischenraum zwischen dem Querhaupt und dem Innenumfang der Hohlwalze außerhalb der Dichtungsglieder mit Druckflüssigkeit eines bestimmten Drucks gefüllt ist und der Druck im Bereich des Dichtungselements niedriger als der Umgebungsdruck ist, so daß durch das Dichtungsglied aus der umgebenden Druckflüssigkeitsmenge eine Zone oder ein "Loch" ausgespart werden, in denen ein niedrigerer oder überhaupt kein Druck herrschen. Ein solcher Betriebsfall ist in der DE-B-36 40 902 beschrieben.

Wenn die Dichtungsglieder als Überdruckelemente im Sinne der DE-A-22 30 139 arbeiten sollen und in der Druckkammer dementsprechend ein hoher Druck herrscht, muß das Dichtungsglied gegen diesen Druck bis auf Drosselbohrungen abgedichtet sein, damit die erforderliche Anpressung an den Innenumfang der Hohlwalze stattfinden kann. Wenn das Dichtungsglied aber als Unterdruckelement arbeiten soll, muß die in die Druckkammer eintretende Druckflüssigkeit ungehindert, d.h. ohne nennenswerten Druckaufbau abströmen können. Der Strömungswiderstand muß also in den beiden Richtungen verschieden sein. Zu diesem Zweck sind in den Dichtungsgliedern der DE-A-36 40 902, deren grundsätzlicher Aufbau den Stützelementen der DE-A-22 30 139 entspricht, Rückschlagventile angeordnet, die in Richtung auf die Druckkammern hin schließen, in der umgekehrten Richtung öffnen.

Die Rückschlagventile stellen einen gewissen Aufwand dar, der die Dichtungsglieder verteuert. Außerdem können sie in ihrer Funktion durch in der Druckflüssigkeit mitgeführte und sich auf dem Ventilsitz festsetzende Verunreinigungen beeinträchtigt werden. Wenn außerdem bei einem der bekannten Dichtungsglieder, die nach dem Prinzip der DE-A-22 30 139 arbeiten, die zu der Druckkammer führende Drosselbohrung bzw. eine der zu den Druckkammern führenden Drosselbohrungen verstopfen, kann nicht mehr genügend Druckflüssigkeit in die betreffende Druckkammer übertreten und über ihren Rand austreten, so daß die Bildung eines tragfähigen Flüssigkeitsfilms an dem Rand gefährdet ist und es zu metallischer Reibung und zu einem Fressen am Innenumfang der Hohlwalze kommen kann, was zum Ausfall des betreffenden Dichtungsgliedes und im Extremfall sogar zu einem Blockieren der Walze führen kann.

Der Erfindung liegt die Aufgabe zugrunde, eine Walze der zum Stand der Technik gehörenden Art einfacher und betriebssicherer zu gestalten.

Diese Aufgabe wird durch die in Anspruch 1 wiedergegebene Erfindung gelöst.

Der wesentliche Unterschied zum Stand der Technik ist, daß die Zylinderkammer, d.h. der zwischen dem Boden der Zylindersackbohrung und der Rückseite des Dichtungsgliedes gebildete Raum, nicht mehr über Drosselbohrungen mit der Druckkammer in Verbindung steht, sondern drosselfrei, d.h. über einen Kanal verhältnismäßig großen Querschnitts, bei dessen Durchströmung kein nennenswerter Druckabfall auftritt. Es handelt sich also bei dem bei der Erfindung vorhandenen Dichtungsglied nicht mehr grundsätzlich um ein solches nach der DE-A-22 30 139, sondern um ein solches nach der DE-A-29 07 761. Im Unterschied zu der Ausführungsform nach der DE-A-29 07 761 jedoch sind zusätzliche, getrennt versorgte Randkammern vorgesehen, denen je für sich Flüssigkeit aus dem Zylinderraum gedrosselt zugeführt wird und die für sich genommen wie ein Stützelement nach der DE-A-22 30 139 wirken.

Aus der FR-A-22 98 643 ist ein Dichtungsglied mit hydrostatischer Druckkammer und Randkammern bekannt, bei dem die Druckkammer drosselfrei und die Randkammern gedrosselt versorgt werden, allerdings nicht über getrennte kanäle. Die Randkammern sind vielmehr über Drosselkanäle mit der Druckkammer verbunden.

Rückschlagventile sich bei der erfindungsgemäßen Ausführung nicht mehr erforderlich. Der Druck in der Druckkammer und in der Zylinderkammer ist stets gleich, weil die Anlagekraft nicht, wie bei der bekannten Ausführungsform, durch die anschließend in die Druckkammer übertretende Druckflüssigkeit, sondern separat erzeugt wird, und zwar durch den Druck in dem Zylinderraum der Kolben/Zylindereinheit. Dieser Druck ist steuerbar, so daß das Dichtungsglied auf diese Weise mit unterschiedlichen Drücken an den Innenumfang der Hohlwalze anpreßbar ist. Über den drosselnden Kanal tritt aus dem Zylinderraum die Druckflüssigkeit in die jeweilige Randkammer aus (die für sich genommen wie ein Stützelement nach der DE-A-22 30 139 wirkt) und strömt über deren Rand kontrolliert ab, so daß sich auf der Anlagefläche des Randes ein tragender Gleitfilm einer bestimmten Dicke bildet. Dadurch und durch das Vorhandensein mindestens zweier Randkammern mit Abstand von der Mitte ergibt sich eine wichtige Stabilisierungsfunktion, indem die Randkammern den Rand der Druckkammer in einem gleichmäßigen geringen Abstand von dem Innenumfang der Hohlwalze halten und einer metallischen Berührung zwischen dem Rand und dem Innenumfang der Hohlwalze vorbeugen.

Die Erfindung ist grundsätzlich schon verwirklicht, wenn nur zwei einander bezüglich der Druckkammer gegenüberliegende Randkammern vorhanden sind.

Bei der bevorzugten Ausführungsform jedoch sind mindestens drei über den Umfang gleichmäßig verteilte, getrennt über drosselnde Kanäle aus dem Zylinderraum versorgte Randkammern vorhanden (Anspruch 2).

Durch dieses Merkmal können die Randkammern über den Umfang gleichmäßig im Sinne einer Drei- oder Mehrpunktlagerung der Dichtungsglieder verteilt sein.

In einer in Betracht kommenden Ausführungsform nach Anspruch 3 sind die Randkammern in dem die Druckkammer umgebenden Rand selbst ausgebildet, indem in diesem Rand Ausnehmungen angebracht sind, die über den drosselnden Kanal mit der Zylinderkammer in Verbindung stehen.

Eine alternative Ausführungsform ist Gegenstand des Anspruchs 4: hierbei kann die Randkammer getrennt von dem die Druckkammer umgrenzenden Rand, insbesondere radial ausserhalb desselben (Anspruch 5) angeordnet sein. Die Stabilisierungsfunktion kann ausgeübt werden, solange nur die Randkammern außerhalb der Mitte der Druckkammer und mit einem ausreichenden Abstand von dieser Mitte vorhanden sind.

Die Wirkungsquerschnitte der Druckkammer und der Zylindersackbohrung können gleich sein (Anspruch 6).

Das Dichtungsglied ist hierbei von den Kräften in der Zylinderkammer und in der Druckkammer vollkommen frei, und es wird die Anpreßkraft ausschließlichlich durch den Druck in dem Zylinderraum bestimmt.

Bei einer anderen Ausführungsform gemäß Anspruch 7 ist jedoch der Wirkungsquerschnitt der Druckkammer etwas größer. Es entsteht dadurch durch den Druck im Druckraum eine Überschußkraft, die das Dichtungsglied vom Innenumfang der Hohlwalze hinwegtreibt. Wird nun in die Zylinderkammer eine konstante Ölmenge eingespeist, so fällt der Druck in der Druckkammer bei einer Entfernung des Dichtungsgliedes vom Innenumfang der Hohlwalze ab. Dieser Entfernung wirkt der Druck in dem Zylinderraum entgegen. Es stellt sich dadurch ein Gleichgewicht ein, welches durch den Druck im Zylinderraum bestimmt ist. Das Dichtungsglied arbeitet in dieser Ausgestaltung gewissermaßen wie ein servogesteuertes Druckbegrenzungsventil.

Diese Ausführungsform kommt insbesondere für Walzen in Betracht, die durch die der Druckkammer zugeführte Druckflüssigkeit temperiert, d.h. beheizt oder gekühlt werden. Es kann dem Dichtungsglied eine konstante, eine vorgegebene Temperatur aufweisende Druckflüssigkeitsmenge zugeführt werden, die ihre Wärme auf den Innenumfang der Hohlwalze überträgt. Die pro Zeiteinheit übertragene Wärmemenge ist wegen der Konstanz der Druckflüssigkeitsmenge ebenfalls konstant. Der Druck kann unabhängig davon durch den in dem Zylinderraum aufrechterhaltenen Druck geregelt werden. Es ergibt sich auf diese Weise eine Walze, die zonenweise durchbiegungssteuerbar ist und deren Temperaturverteilung bei einer Änderung der Liniendruckverteilung nicht nennenswert in Mitleidenschaft gezogen wird.

Ein wichtiger Vorteil des erfindungsgemäßen Dichtungsgliedes bzw. der damit ausgerüsteten Walze besteht darin, daß die von dem Dichtungsglied gegen den Innenumfang der Hohlwalze ausgeübte Kraft nicht durch das Dichtungsglied hindurch übertragen wird, wie es bei den kolbenartigen Stützelementen der DE-A-22 30 139 oder der EP-A-252 251 der Fall ist. Bei diesen Ausführungsformen wird die von dem Stützelement auf den Innenumfang der Hohlwalze erzeugte Kraft in der Zylinderkammer unterhalb des kolbenartigen Stützelements erzeugt und dieses unter der Wirkung der Kraft gegen den Innenumfang der Hohlwalze fortgeschoben. Dies geschieht, weil im Fall der DE-A-22 30 139 die Druckflüssigkeit in der Zylinderkammer nur über Drosselbohrungen abströmen kann, im Fall der EP-A-252 251 überhaupt nicht. Diese Übertragung der Kraft durch das Stützelement hindurch erfordert eine entsprechende Bemessung desselben und hat die praktische Folge, daß bei einem Ausfall einer hydrostatischen Druckkammer auf der Anlageseite des Stützelements dies mit einer der Stützkraft entsprechenden hohen Kraft gegen den Innenumfang der Hohlwalze angedrückt wird, ohne daß die hydrostatische Lagerung in dem Bereich der ausgefallenen Druckkammer zustande kommt. Hierdurch entsteht sofort eine metallische Reibung, die zu einem raschen Ausfall des Stützelements bzw. sogar der Hohlwalze führen kann.

Bei der Erfindung hingegen ist das Stützelement ein echtes Dichtungsglied und wegen der einen großen Querschnitt aufweisenden Kanäle zwischen der Zylinderkammer und der Druckkammer von dem die Stützkraft ergebenden Druck hydraulisch entlastet. Der Anlagedruck des Dichtungsgliedes am Innenumfang der Hohlwalze dient nicht der Erzeugung der Stützkraft, sondern lediglich der Abdichtung der Druckkammer. Wenn hierbei einer der zu den einzelnen Randkammern führenden drosselnden Kanäle verstopft, fällt nur diese Randkammer aus. Da die Anlage des Dichtungsgliedes am Innenumfang der Hohlwalze unter einem wesentlich geringeren Druck erfolgt, ist auch die Gefahr einer zerstörerischen metallischen Reibung des Dichtungsgliedes am Innenumfang der Hohlwalze gegenüber den bekannten Ausführungsformen verringert.

Im Hinblick auf die EP-A-252 251 sei noch bemerkt, daß dort zwar ebenso wie bei der Erfindung zwei getrennte Zuleitungen für ein Stützelement vorhanden sind, daß aber dort die Zylinderkammer, in die eine Zuleitung führt, geschlossen ist und die Druckkammer durch die andere Zuleitung versorgt wird. Bei der Erfindung ist die Druckkammer direkt, also drosselfrei, mit der Zylinderkammer verbunden, wodurch der Druck in der Zylinderkammer keine Kraft auf das Dichtungsglied ausübt. Die Druckflüssigkeit in der Zylinderkammer ist die gleiche wie in der Druckkammer. Die Druckflüssigkeit in dem Zylinderraum hat nur die Funktion der Herstellung des Anlagedrucks des Dichtungsgliedes und der Stabilisierung mit Hilfe der Randkammern.

Bei einer Walze mit innerem Hub, bei welcher sich also die Hohlwalze gegenüber dem Querhaupt radial verlagern kann und nicht auf dem Querhaupt gelagert ist, empfiehlt sich eine Dämpfungseinrichtung nach Anspruch 8. Walzen der in Rede stehenden Art werden durchweg horizontal angeordnet, und es hat daher die jeweilige Hohlwalze im kräftefreien Zustand die Neigung, auf die Oberseite des Querhaupts oder bis zur Anlage an einem entsprechenden Anschlag (beispielsweise auf den Stützelementen oder an den Randlagern zur Aufnahme der axialen Kräfte) abzusenken. Bei einer plötzlichen Wegnahme des Stützdrucks und Gewichten der Hohlwalze bis zu 20 t und angesichts der in dem durchgebogenen Querhaupt gespeicherten Formänderungsenergie kann der Anprall ohne besondere Maßnahmen heftig sein und zu Schäden führen.

Eine für Kalander, bei denen die erfindungsgemäße Walze Unterwalze ist und die eine Schnelllüfteinrichtung aufweisen, wichtige Ausgestaltung der Dämpfungseinrichtung ist Gegenstand des Anspruchs 9.

Die Dämpfungseinrichtung soll also nicht von Anfang an in Tätigkeit treten, da dadurch unter Umständen das rasche Öffnen der Walzenspalte bei einem Bahnriß oder dergleichen behindert würde. Am Anfang soll also die Hohlwalze ungehindert absacken können. Die Dämpfungseinrichtung soll erst nach Zurücklegung der Anfangs-Totgangstrecke wirksam werden.

Es fällt unter die Erfindung, daß die Dämpfungseinrichtung ein separates Bauteil ist. Bei der bevorzugten Ausführungsform der Erfindung nach Anspruch 10 ist jedoch vorgesehen, daß die Dämpfungseinrichtung in das erfindungsgemäße Dichtungsglied integriert ist. Dadurch vereinfacht sich die Bauweise und werden schwächende Bohrungen oder Ausnehmungen im Querhaupt eingespart.

Dieser Gedanke kann insbesondere in der in Anspruch 13 wiedergegebenen Weise verwirklicht werden.

Es wurde gefunden, daß für eine andere Art der Dämpfung, nämlich die Dämpfung der im Betrieb auftretenden Schwingungen innerhalb der Walze die Flüssigkeitsschicht am Rande der Druckkammer einen deutlichen Einfluß haben kann. Bei einer plötzlichen Annäherung des Randes der Druckkammer und des Innenumfangs der Hohlwalze beispielsweise wird die Flüssigkeit durch den engen Spalt an dem Rand der Druckkammer verdrängt. Durch diese Drosselwirkung ergibt sich eine Dämpfung. Diese Dämpfung kommt aber nur zustande, wenn das Dichtungsglied bei der plötzlichen Annäherung des Innenumfangs der Hohlwalze nicht ohne weiteres ausweichen kann. Bei einem Ausweichen des Dichtungsgliedes würde die in dem Zylinderraum befindliche Druckflüssigkeit zum Teil durch die Drosselbohrungen in die Randkammern entweichen, zum größeren Teil aber durch die Zuleitung zur Pumpe zurückgedrückt werden.

Um das zu unterbinden und das Dichtungsglied in bezug auf seine Position gegenüber dem Innenumfang der Hohlwalze "härter" zu machen, empfiehlt sich die Ausgestaltung nach Anspruch 12, die das Zurückdrücken von Flüssigkeit aus dem Zylinderraum unterbindet. Dadurch kommt die Dämpfungswirkung des Flüssigkeitsfilms am Rand der Druckkammer zur Geltung.

Das Rückschlagventil hat aber zur Folge, daß bei einem gewollten Absenken der Hohlwalze dies nur so schnell geschehen kann, wie es die Abströmung von Druckflüssigkeit aus dem Zylinderraum durch die engen Drosselbohrungen in die einzelnen Randkammern zuläßt. Eine solche Anordnung stünde also einer Schnelllüftung entgegen.

Um dennoch eine Schnelllüftung zustande zu bringen, kann die Ausgestaltung nach Anspruch 13 vorgesehen sein. Das Rückschlagventil ist auf einen Druckwert vorgespannt, der natürlich oberhalb des im normalen Betrieb in dem Zylinderraum auftretenden Druckes liegen muß. Wenn dann eine plötzliche Absenkung der Hohlwalze 1 erfolgen soll und der Druck in der Zylinderkammer und der Druckkammer abgesenkt wird, ruht die Hohlwalze mit ihrem ganzen Gewicht nur noch auf der Druckflüssigkeit in dem Zylinderraum, der entsprechend ansteigt und schließlich den Öffnungsdruck des Rückschlagventils überschreitet, so daß dieses öffnet und ein plötzliches Abströmen der relativ geringen Druckflüssigkeitsmenge aus dem Zylinderraum und damit eine Schnelllüftung ermöglicht. Es versteht sich, daß der Öffnungsdruck des Rückschlagventils unterhalb des durch das Gewicht der Hohlwalze in dem Zylinderraum erzeugten Druckes liegen muß. Durch die Ausgestaltung ist es also möglich, die Dämpfungswirkung des Flüssigkeitsfilms auf dem Rand der Druckkammer zu nutzen und dabei gleichzeitig die Möglichkeit zur Schnelllüftung zu bewahren.

In der Zeichnung sind Ausführungsbeispiele der Erfindung schematisch dargestellt.

Fig. 1 zeigt schematisch die Ansicht eines Walzenpaars, bei welchem eine erfindungsgemäße Walze mit erfindungsgemäßen Dichtungsgliedern als Oberwalze ausgebildet ist, teilweise im Schnitt;

Fig. 2 zeigt einen Querschnitt gemäß der Linie II-II in Fig. 1 in leicht vergrößertem Maßstab;

Fig. 3 zeigt eine Ansicht entsprechend Fig. 1 eines anderen Walzenpaars, bei welchem eine erfindungsgemäße Walze mit erfindungsgemäßen Dichtgliedern als Unterwalze ausgebildet ist;

Fig. 4 zeigt einen Schnitt nach der Linie IV-IV in Fig. 3 in leicht vergrößertem Maßstab;

Fig. 5 zeigt ein einzelnes Dichtungsglied in vergrössertem Maßstab als Schnitt nach der Linie V-V in Fig. 6;

Fig. 6 zeigt eine Ansicht gemäß Fig. 5 von oben;

Fig. 7 zeigt eine Ansicht entsprechend Fig. 5 einer anderen Ausführungsform des Dichtungsgliedes als Schnitt der Linie VII-VII in Fig. 8;

Fig. 8 zeigt eine Ansicht gemäß Fig. 7 von oben;

Fig. 9 und 10 zeigen Schnitt nach den Linien IX-IX bzw. X-X in Fig. 8.

Fig. 11 zeigt eine Ansicht entsprechend Fig. 5 einer weiteren Ausführungsform des Dichtungsgliedes.

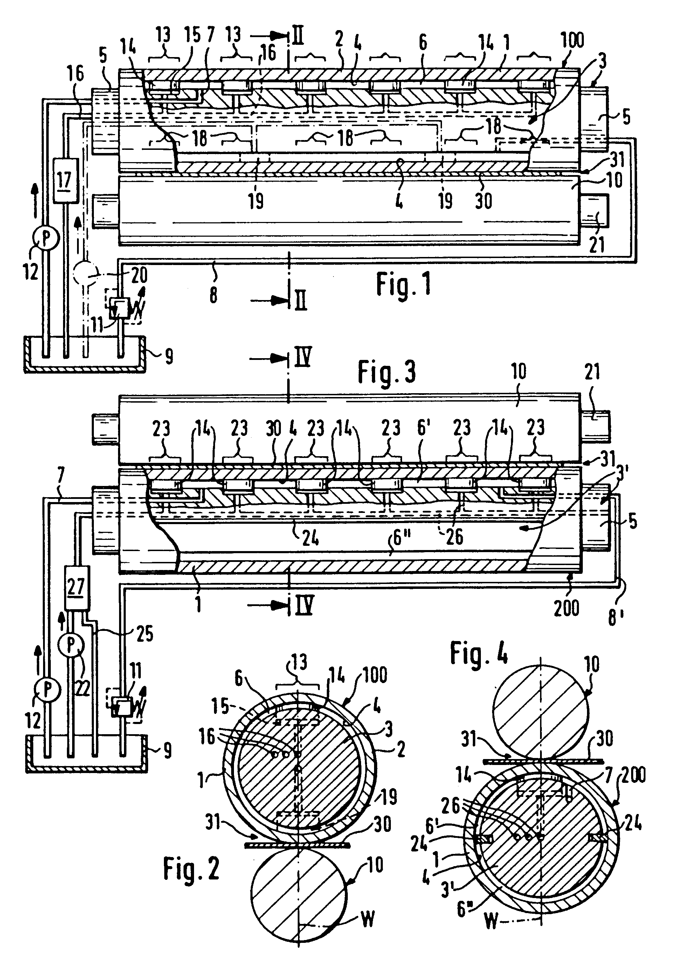

Die in den Fig. 1 und 2 dargestellte Walzenanordnung umfaßt eine Unterwalze 10 und eine Oberwalze 100, zwischen denen eine Warenbahn 30 einer Druckbehandlung in dem Walzspalt 31 ausgesetzt wird. Die Unterwalze 10 ist eine konventionelle massive Walze. Die Oberwalze 100 hingegen umfaßt eine umlaufende Hohlwalze 1, deren Außenumfang 2 den arbeitenden Walzenumfang bildet und die der Länge nach von einem stillstehenden Querhaupt 3 durchgriffen ist, welches allseitig Abstand zum Innenumfang 4 der Hohlwalze 1 beläßt, so daß es sich innerhalb der Hohlwalze 1 durchbiegen kann, ohne mit dem Innenumfang 4 in Berührung zu kommen.

Die Zapfen 21 der Unterwalze 10 sowie die aus der Hohlwalze 1 an den Enden vorstehenden Enden 5 des Querhauptes 3 sind im Walzenständer geführt und werden durch geeignete nicht dargestellte Belastungsvorrichtungen gegeneinandergedrückt.

Die Hohlwalze 1 kann an ihren Enden auf dem Querhaupt 3 durch in den Fig. 1 und 2 nicht dargestellte Lager drehbar gelagert sein. Bei einem alternativen Ausführungsbeispiel ist die Hohlwalze 1 an dem Querhaupt 3 in der Wirkebene W, d.h. in der in Fig. 1 parallel zur Zeichenebene gelegenen Verbindungsebene der Achsen der beiden Walzen 10 und 100, geführt und kann sich als Ganzes gegenüber dem Querhaupt 3 in dieser Ebene verlagern.

Der Zwischenraum 6 zwischen dem Querhaupt 3 und dem Innenumfang 4 der Hohlwalze 1 ist an den Enden durch nicht dargestellte Endquerdichtungen abgedichtet und kann über eine Zuleitung 7 mit Druckflüssigkeit gefüllt werden, die über eine Leitung 8 wieder in den Vorratsbehälter 9 zurückführbar ist. In der Leitung 8 ist ein Druckbegrenzungsventil 11 angeordnet, welches es gestattet, in dem Zwischenraum 6 einen vorgebbaren Druck aufrechtzuerhalten. Die Zuleitung 7 mündet an dem in Fig. 1 linken Ende in den Zwischenraum 6 ein, die Rückleitung 8 am rechten Ende. Auf diese Weise ergibt sich eine Strömung in Längsrichtung des Zwischenraums, die zu einer Vergleichmäßigung der Temperatur der Hohlwalze 1 führt, wenn die Druckflüssigkeit gleichzeitig zur Beeinflussung der Temperatur dient. Die Druckflüssigkeit wird dem Vorratsbehälter entnommen und über eine Pumpe 12, an die die Zuleitung 7 angeschlossen ist, auf Druck gebracht.

Dieser Druck herrscht in dem keinerlei Unterteilungen aufweisenden hohlzylindrischen Zwischenraum 6 überall in gleicher Weise, so daß er ohne zusätzliche Maßnahmen keine Kraftwirkungen auf die Hohlwalze 1 ausüben würde, die zu einer Verlagerung bzw. Kraftausübung derselben in der Wirkebene W führt. Die Hohlwalze 1 wird durch den Druck im Zwischenraum 6 lediglich "aufgeblasen", ohne sonstige von aussen erkennbare Wirkungen zu zeigen.

Nun sind aber in der Hohlwalze 1 auf der dem Walzspalt 31 abgelegenen Seite Zonen 13 gebildet, in denen der in dem Zwischenraum 6 herrschende Druck ausgespart ist. Die Längenerstreckung der Zonen ist durch die kleinen Klammern angedeutet. In dem Ausführungsbeispiel der Fig. 1 und 2 sind sechs solcher Zonen vorhanden, doch ist diese Zahl keineswegs zwingend.

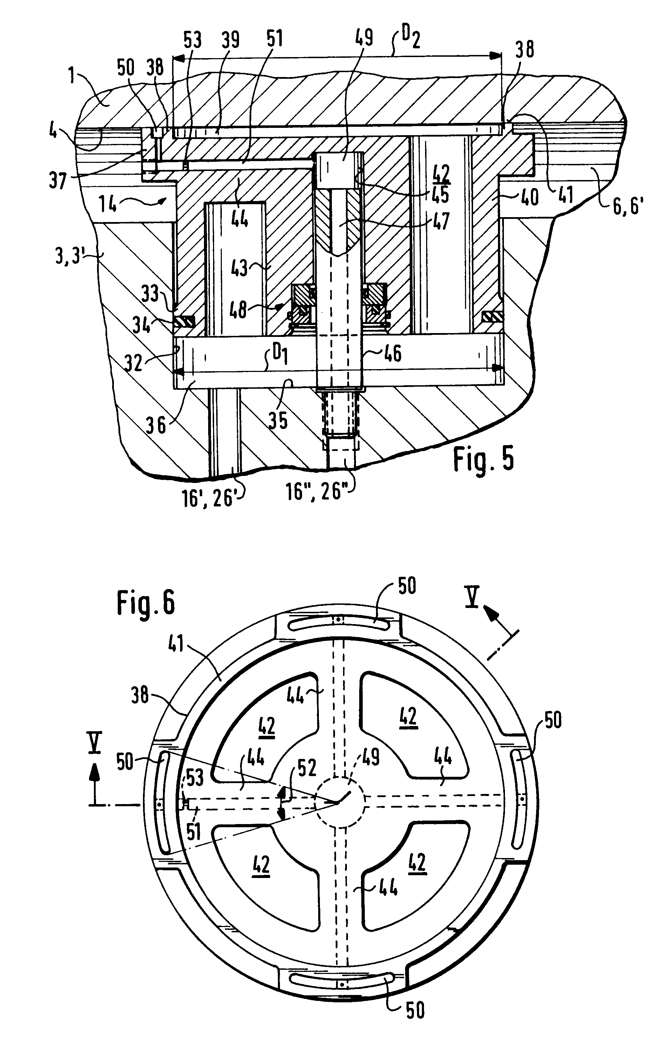

Die Zonen 13 sind durch ringförmige Dichtungsglieder 14 gebildet, die in Zylindersackbohrungen 15 an der Oberseite des Querhauptes 3 verschiebbar geführt sind und mit einer entsprechend gestalteten Stirnseite dichtend am Innenumfang 4 der Hohlwalze 1 anliegen. Jede der Zylindersackbohrungen 15 ist über eine Verbindungsleitung mit einer von mehreren Zuleitungen 16 (Fig. 2) und über diese mit einer Steuereinrichtung 17 verbunden. Die Zuleitungen 16 sind Doppelleitungen, die vereinfacht dargestellt sind und aus jeweils zwei Teilzuleitungen 16′,16″ bestehen, über die dem Dichtungsglied 14 zwei voneinander unabhängige Druckflüssigkeiten zugleitet werden können, die von der Steuereinrichtung 17 geliefert werden. Dies wird anhand der Fig. 4 und 5 noch im einzelnen beschrieben. In gegen den Innenumfang 4 der Hohlwalze 1 offenen Druckkammern im Innern der ringförmigen Dichtungsglieder 14 kann auf diese Weise in den Zonen 13 ein Druck aufrechterhalten werden, der in einer ersten Betriebsweise niedriger ist als der Druck in dem Zwischenraum 6 und der in den einzelnen Dichtungsgliedern 14 oder in Gruppen von Dichtungsgliedern 14 je nach der Zahl der Zuleitungen 16 unabhängig gesteuert werden kann. Im einfachsten Fall verbindet die Steuereinrichtung 17 die Zonen 13 einfach mit dem Vorratsbehälter 9, so daß die Zonen 13 praktisch drucklos sind.

Auf diese Weise werden in dem ansonsten gleichmäßigen Druck in dem Zwischenraum 6 gewissermaßen "Löcher" oder "Leerstellen" ausgespart, in denen der Druck nicht herrscht. Dadurch wird die Druckausübung der in dem Zwischenraum 6 befindlichen Flüssigkeit verungleichmäßigt. Den Zonen 13 liegen bezüglich der Meridianebene der Walze 100, d.h. der zur Zeichenebene in Fig. 1 senkrechten Längsmittelebene der Walze 100 bzw. des Querhaupts 3 gedachte Zonen 18 gegenüber, die in Fig. 1 wieder durch kleine Klammern angedeutet sind und in denen der volle Druck in dem Zwischenraum 6 herrscht. Da diesen Zonen 18 oberhalb der Meridianebene in den Zonen 13 kein oder nur ein verminderter Druck gegenübersteht, ist die Gesamtwirkung des Vorhandenseins der Zonen 13 im wesentlichen die gleiche, als würde an der Unterseite des Querhaupts 3 lokal, also in den durch die Zonen 18 gegebenen Bereichen, ein dem Druck in dem Zwischenraum 6 entsprechender Druck ausgeübt, der gemäß Fig. 1 die Hohlwalze 1 gegenüber dem Querhaupt 3 nach unten, d.h. gegen den Walzspalt 31 hin, zu verlagern bestrebt ist. Obwohl also bei der Walze 100 die ringförmigen Dichtungsglieder 14 auf der Oberseite des Querhaupts 3 angeordnet sind, erfolgt die Kraftausübung nach unten. Dies wird durch das Grundprinzip erreicht, den Zwischenraum 6 rundum, also ohne Längsunterteilungen mit Druckflüssigkeit unter einem einheitlichen Druck zu füllen.

In Fig. 1 sind noch zwei weitere Druckstempel 19 dargestellt, die an der Unterseite des Querhaupts 3 angeordnet sind und eine positive Kraft gegen die Unterseite des Innenumfangs 4 der Hohlwalze 1 ausüben können. Sie werden von einer Pumpe 20 mit Druckflüssigkeit versorgt. Natürlich kann der Druck zur Versorgung der Druckstempel 19 auch von der Pumpe 12 abgeleitet sein. Da die Druckstempel 19 lediglich zusätzliche Elemente sind, mittels deren die durch die Zonen 13 hervorgerufene Liniendruckverteilung fakultativ modifizierbar ist, sind die Druckstempel 19 mit ihren Zuleitungen und ihrer Pumpe 20 strichpunktiert wiedergegeben.

In einer zweiten Betriebsweise kann den Dichtungsgliedern 14 mittels der Steuereinrichtung 17 ein Druck zugeführt werden, der höher ist als der Druck in dem Zwischenraum 6. Die Hohlwalze 1 der Walze 100 erfährt dann gemäß Fig. 1, 2 eine nach oben gerichtete Kraft, die sie vom Walzspalt 31 wegzuziehen trachtet. Diese Betriebsweise kann also dazu dienen, den Walzspalt 31 zu öffnen, beispielsweise um eine neue Bahn 30 einzuführen.

In den Fig. 3 und 4 ist eine Walzenanordnung dargestellt, bei der die erfindungsgemäße Walze die Unterwalze 200 bildet. Soweit die Teile denen der Fig. 1 und 2 entsprechen, sind die Bezugszahlen gleich.

Die Unterwalze 200 der Fig. 3 und 4 umfaßt ebenso wie die Oberwalze 100 der Fig. 1 und 2 eine um ein Querhaupt 3′ umlaufende Hohlwalze 1, die gegen eine Oberwalze 10 arbeitet und einen Druck auf eine Warenbahn 30 ausübt.

Im Gegensatz zu der Walze nach den Fig. 1, 2 sind hier aber in Höhe der breitesten Stelle des Querhauptes 3′ Längsdichtungen 24 vorgesehen, die sich von einer Endquerdichtung der Walze 200 zur anderen erstrecken und den Abstandsraum zwischen dem Querhaupt 3′ und dem Innenumfang 4 der Hohlwalze 1 in zwei halbzylinderschalenförmige Zwischenräume 6′ und 6″ unterteilen. Der auf der Seite des Walzspalts gelegene Zwischenraum 6′ ist über die Leitung 7 von der Pumpe 12 mit Druckflüssigkeit füllbar, die über eine Leitung 8′ und ein Druckbegrenzungsventil 11 in den Vorratsbehälter 9 zurückgeführt wird. Die durch das Druckbegrenzungsventil 11 einen wählbaren Druck aufweisende Druckflüssigkeit in dem Zwischenraum 6′ übt eine im wesentlichen gleichmäßige gegen den Walzspalt 31 gerichtete Kraft auf die Hohlwalze 1 aus und trägt so direkt zur Erzeugung des Liniendrucks bei. In dem Zwischenraum 6″ befindet sich an den Längsdichtungen 24 übergetretene Leckflüssigkeit unter praktisch keinem oder nur einem geringen Druck.

Die gleichmäßige Druckausübung in dem Zwischenraum 6′ wird durch die Dichtungsglieder 14 unterbrochen, die in diesem Fall auf der Seite des Walzspalts angeordnet sind. Mittels der Dichtungsglieder 14 ist es sowohl möglich, über die Zuleitungen 26 in den durch die Dichtungsglieder 14 abgeteilten Zonen 23 einen gegenüber dem Zwischenraum 6′ erniedrigten Druck als auch einen gegenüber dem Zwischenraum 6′ erhöhten Druck einzustellen. Mittels der Steuereinrichtung 27 können also Druckkammern im Innern der Dichtungsglieder 14 wahlweise über die Leitung 25 zum Beispiel mit dem Vorratsbehälter 9 verbunden werden, so daß in ihnen praktisch kein Druck oder nur ein gezielt verminderter Druck herrscht, oder es kann mittels der Pumpe 22 auf die Dichtungsglieder 14 in den Zonen 23 ein gegenüber dem Druck in dem Zwischenraum 6′ erhöhter Druck aufgegeben werden, so daß die Dichtungsglieder 14 lokal einen positiven Druck gegen den Innenumfang der Hohlwalze 1 ausüben, der sich über den Druck der Druckflüssigkeit in dem Zwischenraum 6′ erhebt. Obwohl vereinfacht dargestellt, sind auch die Zuleitungen 26 als Doppelleitungen mit Teilzuleitungen 26′,26″ ausgeführt, über die separate Druckflüssigkeiten den Dichtungsgliedern 14 zuführbar sind.

Auch in diesem Ausführungsbeispiel haben die Dichtungsglieder 14 also zwei Betriebsweisen, die sich jedoch im Gegensatz zu dem Ausführungsbeispiel nach den Fig. 1 und 2 nicht darin äußern, daß die Hohlwalze 1 einmal gegen den Walzspalt 31 angedrückt, das andere Mal von diesem fortgezogen wird, sondern darin, daß der an sich gleichmäßige Druck in der Zylinderkammer 6′ in den Zonen 23 durch die Dichtungsglieder 14 lokal modifiziert wird, so daß die Liniendruckverteilung beeinflußt wird, wobei aber in jedem Fall ein Liniendruck vorhanden ist. Ist der Druck in den Dichtungsgliedern 14 niedriger als in dem Zwischenraum 6′, so bilden sich in der gleichmäßigen Druckverteilung "Löcher", ist der Druck jedoch höher, so wird in den Zonen 23 ein über den Druck in dem Zwischenraum 6′ hinausgehender positiver Zusatzdruck ausgeübt. Im ersteren Fall wirken die Dichtungsglieder als "Unterdruckelemente", im zweiten Fall als "Überdruckelemente".

In den Fig. 5 und 6 ist ein Dichtungsglied mehr im einzelnen dargestellt, welches in den vorbeschriebenen und ähnlichen Walzenanordnungen Anwendung finden kann.

Wie aus Fig. 5 ersichtlich ist, umfaßt das Dichtungsglied 14 ein zylindrisches, kolben- oder stempelartiges Gehäuse 40, welches mit Spiel in einer Zylindersackbohrung 32 des Querhaupts 3,3′ sitzt, am gemäß Fig. 5 unteren Ende einen bis auf das Maß der Zylindersackbohrung 32 vorspringenden Rand 33 aufweist und dort durch eine umlaufende kolbenringartige Dichtung 34 bei der Hubbewegung des Dichtungsgliedes 14 in Achsrichtung der Zylindersackbohrung 32 abgedichtet ist. Auf der Unterbzw. Rückseite des Dichtungsgliedes 14 ist zwischen diesem und dem Boden 35 der Zylindersackbohrung 32 eine Zylinderkammer 36 gebildet, die durch eine Teilzuleitung 16′,26′ mit Druckflüssigkeit füllbar ist. Am oberen Ende weist das zylindrische Gehäuse 40 einen umlaufenden Vorsprung 37 auf, und es ist durch einen geschlossen umlaufenden Rand 38 auf der dem Innenumfang 4 der Hohlwalze 1 zugewandten Oberseite des Dichtungsgliedes 14 eine flache Druckkammer 39 ausgenommen, die in dem Ausführungsbeispiel kreisförmig begrenzt ist und in der Praxis einen Durchmesser von 80 bis 320 mm und eine Tiefe von einigen Millimetern aufweist. Der umlaufende Rand 38 bildet gleichzeitig die Anlagefläche 41 des Dichtungsgliedes 14 am Innenumfang 4 der Hohlwalze 1.

Das Dichtungsglied 14 ist in seinem Querschnitt nicht geschlossen, sondern durch einen großen Querschnitt aufweisende von der Rückseite bis in die Druckkammer 39 durchgehende Kanäle 42 durchbrochen. Das Gehäuse 40 des Dichtungsgliedes 14 ist im unteren Teil hohlzylindrisch ausgebildet und enthält einen konzentrischen zylindrischen Mittelteil 43, der in dem Ausführungsbeispiel durch vier radiale Stege 44 gehalten ist, die zu dem äußeren Teil des Gehäuses 40 hinführen. Die Kanäle 42 sind in der aus Fig. 6 ersichtlichen Weise zwischen den Stegen 44 gebildet. Bedingt durch den großen Querschnitt der Kanäle 42 steht der Druck der Teilzuleitungen 16′,26′ auch in der Druckkammer 39 an und wirkt in deren Querschnitt gegen den Innenumfang 4 der Hohlwalze 1. Dieser Druck kann höher sein als der Druck in dem umgebenden Zwischenraum 6,6′ oder niedriger.

In dem zylindrischen Mitteilteil 43 ist eine oben geschlossene Zylinderbohrung 45 angebracht, in die ein in den Boden 35 der Zylinderkammer 36 dicht eingeschraubter Kolben 46 eingreift, der eine Längsbohrung 47 aufweist, die mit der Teilzuleitung 16″,26″ in Verbindung steht. Durch eine Dichtungsanordnung 48 im unteren Bereich des Mittelteils 43 ist der Kolben 46 gegenüber der Zylinderbohrung 45 abgedichtet. Oberhalb des Kolbens 46 ist ein Zylinderraum 49 gebildet, der über die Stege 44 durchsetzende radiale Kanäle 51 mit in der Anlagefläche 41 des Randes ausgebildeten Randkammern 50 in Verbindung steht, die ringsum vom Rand 38 umschlossen und gegen den Innenumfang 4 der Hohlwalze 1 hin offen sowie im Bereich der Stege 44 angeordnet sind und in dem Ausführungsbeispiel einen Umfangswinkel 52 von ca. 35° einnehmen.

Wesentlich ist, daß der Kanal 51 drosselnd ausgebildet ist, d.h. selbst einen auf seiner ganzen Länge geringfügigen Durchmesser aufweist oder aber eine eingesetzte Drosselstelle oder eine Blende 53, wie in Fig. 5 dargestellt, enthält. Durch die Drosselung bedingt stellt sich an der einen Teil der Anlagefläche 41 bildenden Umrandung der Randkammern 50 ein tragender Flüssigkeitsfilm ein, der das Dichtungsglied 14 gegen den in dem Zylinderraum 49 ausgeübten, gegen den Innenumfang 4 der Hohlwalze 1 gerichteten Druck abstützt. Die in dem Ausführungsbeispiel vorhandenen vier gleichmäßig über den Umfang verteilten Randkammern 50 sind voneinander getrennt und werden getrennt gedrosselt mit Druckflüssigkeit versorgt, so daß ein tragender Flüssigkeitsfilm einer vorbestimmten Stärke an über den Umfang verteilten Stellen vorhanden ist und das ganze Dichtungsglied 14 auf diese Weise stabil auf einem Flüssigkeitsfilm getragen und auch in den Zwischenbereichen zwischen den Randkammern 50 (die sich also nicht über den ganzen Umfang erstrecken müssen) in einem vorgegebenen sehr kleinen Abstand vom Innenumfang 4 der Hohlwalze 1 gehalten wird, so daß es an keiner Stelle zu einer metallischen Berührung zwischen dem Rand 38 und dem Innenumfang 4 der Hohlwalze 1 kommen kann. Für eine vollständige derartige Stabilisierung sind mindestens drei voneinander unabhängige Randkammern 50 erforderlich, doch könnten außer den in dem Ausführungsbeispiel gezeigten vier Randkammern 50 auch mehr vorhanden sein.

In dem Ausführungsbeispiel der Fig. 5 und 6 ist der Durchmesser $D_2$ der kreisförmig begrenzten Druckkammer 39 gleich dem Durchmesser $D_1$ der Zylinderkammer 36. In diesem Fall ist das Dichtungsglied 14 von den in der Druckkammer 39 gegen den Innenumfang 4 der Hohlwalze 1 ausgeübten Kräften völlig frei und wird der zur Abdichtung notwendige Anlagedruck ausschließlich durch den Druck in dem Zylinderraum 49 bestimmt.

Es ist aber auch möglich, den Durchmesser $D_2$ der Druckkammer 39 geringfügig, d.h. einige Prozent, größer zu machen als den Duchmesser $D_1$. In diesem Fall entsteht durch den Druck in der Druckkammer 39 eine gewisse Überschußkraft, die das Dichtungsglied 14 von dem Innenumfang 4 der Hohlwalze 1 wegzudrücken bestrebt ist und der durch den Druck im Zylinderraum 49 entgegengewirkt wird. Wenn dann durch die Teilzuleitungen $16',26'$ eine temperierte Druckflüssigkeit mit konstantem Volumenstrom eingeleitet wird, stellt sich der Druck in der Druckkammer 39 von selbst auf einen Wert ein, der durch die Andruckkraft in dem Zylinderraum 49 bestimmt ist. Durch den gleichmäßigen Volumenstrom der temperierten Druckflüssigkeit erfolgt ein im wesentlichen gleichmäßiger Wärmetransport zwischen der Hohlwalze 1 und der Druckflüssigkeit. Der Druck, d.h. die Beeinflussung des Liniendrucks, kann durch entsprechende Bemessung des Drucks in dem Zylinderraum 49 eingestellt und gesteuert werden, ohne daß der gleichmäßige Wärmetransport und damit die eingestellte Temperierung der Hohlwalze 1 davon beeinflußt werden.

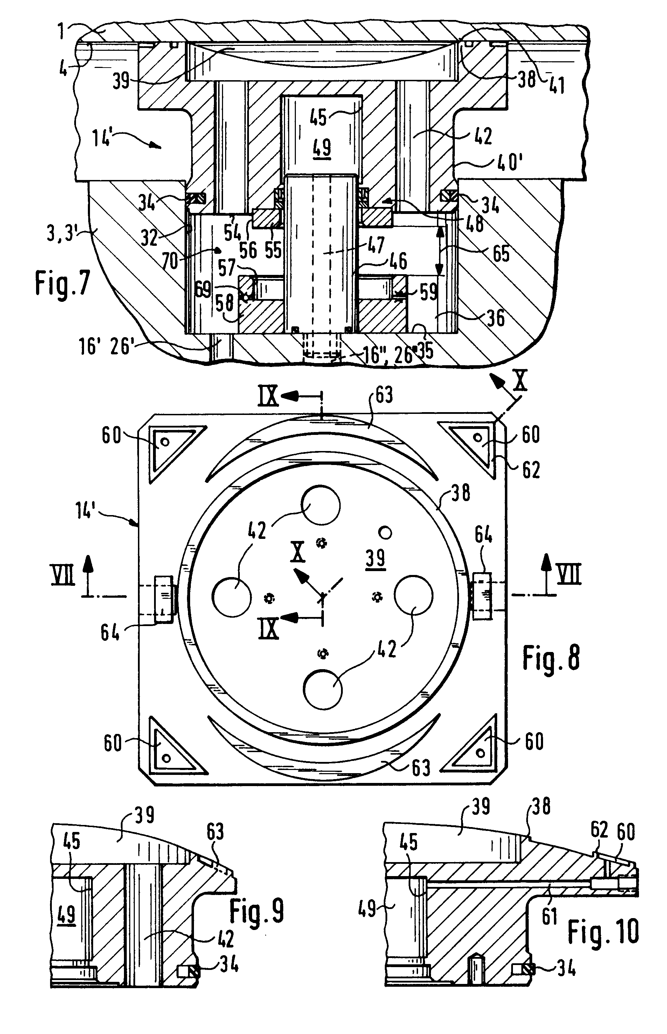

In den Fig. 7 bis 10 ist ein anderes Dichtungsglied $14'$ dargestellt. Soweit die Teile mit denen der vorangehenden Figuren übereinstimmen, sind die Bezugszahlen gleich.

Das Dichtungsglied $14'$ unterscheidet sich im wesentlichen dadurch von dem Dichtungsglied 14 der Fig. 5 und 6, daß die Randkammern nicht in dem Rand 38 selbst ausgebildet, sondern radial außerhalb desselben angeordnet sind, und zwar in den Ecken des in dem dem Innenumfang 4 der Hohlwalze 1 zugewandten Teil einen quadratischen Grundriß aufweisenden Gehäuses $40'$. Die Randkammern 60 sind in der aus Fig. 10 ersichtlichen Weise über drosselnde Kanäle 61 mit der gemeinsamen Zylinderkammer 49 verbunden. Der Grundriß der Randkammern 60 ist der eines gleichschenkligen Dreiecks, die Anlagefläche 62 der Randkammern 60 ist in ihrer Gestalt dem Innenumfang 4 der Hohlwalze 1 angepaßt, wie ebenfalls aus Fig. 10 zu ersehen ist. Die beiden dem Rand 38 der Druckkammer 39 in Umfangsrichtung außen vorgelagerten halbmondförmigen Stege 63, deren Oberseite in der gleichen, dem Innenumfang 4 der Hohlwalze 1 entsprechenden Zylinderfläche wie der Rand 38 liegen, dienen als Abstreifer für am Innenumfang 4 der Hohlwalze 1 mitgeführte Druckflüssigkeit und haben im Verein mit den beiden dem Rand 38 in Längsrichtung der Walze außen vorgelagerten rechteckigen Feldern 64 (Fig. 8) den zusätzlichen Zweck, daß die Anlagefläche des Dichtungsgliedes $14'$ in Umfangsrichtung, an jeder Stelle seiner Längserstreckung gesehen, im wesentlichen gleich ist. Dies hat eine Bedeutung für die Wärmeentwicklung durch die Flüssigkeitsreibung im Anlagebereich, die dadurch ebenfalls über die Länge des Dichtungsgliedes $14'$ einigermaßen konstant bleibt.

Die den großen Querschnitt aufweisenden Kanäle 42 sind in dem Ausführungsbeispiel als über den Umfang gleichmäßig verteilte achsparallele Bohrungen ausgebildet.

Wenn bei dem Dichtungsglied $14'$ der Druck in den Zuleitungen $16',26'$ bzw. $16'',26''$ weggenommen wird, wird das Dichtungsglied $14'$ unter dem Gewicht der Hohlwalze 1 sehr rasch absinken und unter Umständen recht heftig auf der Oberseite des Querhaupts $3,3'$ aufschlagen. Um diesen Effekt zu vermeiden, ist eine Dämpfungseinrichtung 70 vorgesehen, die einen an der Unterseite 54 des Gehäuses $40'$ angeschraubten, den Kolben 46 umgebenden, am Außenumfang 56 zylindrischen Ring 55 umfaßt, der gleichzeitig die Dichtungsanordnung 48 festhält. Auf dem Boden 35 der Zylinderkammer 36 ist ein Zylinder 58 angeschraubt, der nach oben offen ist und dessen Innenumfangsfläche 57 einen wenig größeren Druchmesser aufweist als die Außenumfangsfläche 56. Der Zylinder 58 umgibt den Kolben 46 in der gleichen Weise wie der Ring 55. Beim Absenken des Dichtungsgliedes 14' taucht der Ring 55 kolbenartig in den Zylinder 58 ein. Die eingeschlossene Druckflüssigkeit kann nur zwischen den Zylinderflächen 56,57 bzw. durch zusätzlich angebrachte Drosselbohrungen 59 entweichen, wodurch ein Dämpfungseffekt eintritt. Die Öffnung des Zylinders 58 nach oben gewährleistet, daß darin Druckflüssigkeit stehenbleibt,auch wenn die Zylinderkammer 36 teilweise entleert sein sollte. In der kurzen Zeitspanne zwischen dem Ablassen des Drucks aus der Zylinderkammer 36 und dem Eintauchen des Rings 55 in den Zylinder 58 vergeht eine so kurze Zeit, daß aus den gegebenenfalls vorhandenen Drosselbohrungen noch keine wesentliche Menge abgelaufen ist. Um das Anheben des Dichtungsgliedes 14' zu erleichtern, können in den Drosselbohrungen 59 Rückschlagventile 69 angeordnet sein, wie es in der in Fig. 7 linken Drosselbohrung 59 dargestellt ist. Wichtig ist, daß die Dämpfungseinrichtung eine Anfangs-Totgangstrecke 65 aufweist (Fig.7), d.h. daß das Dichtungsglied 14' zunächst um den Betrag 65 frei in die Oberseite des Querhaupts 3,3' einsinken kann, bevor die Dämpfungseinrichtung 70 bremsend in Aktion tritt. Die Bremsung tritt erst ein, wenn der Ring 55 die Oberseite des Zylinders 58 erreicht hat. Auf diese Weise ist eine Schnellüftung einer als Unterwalze zum Beispiel in einem Kalander eingesetzten Walze um den Betrag 65 möglich und wird dennoch die Endlage ohne schädlichen Aufprall erreicht.

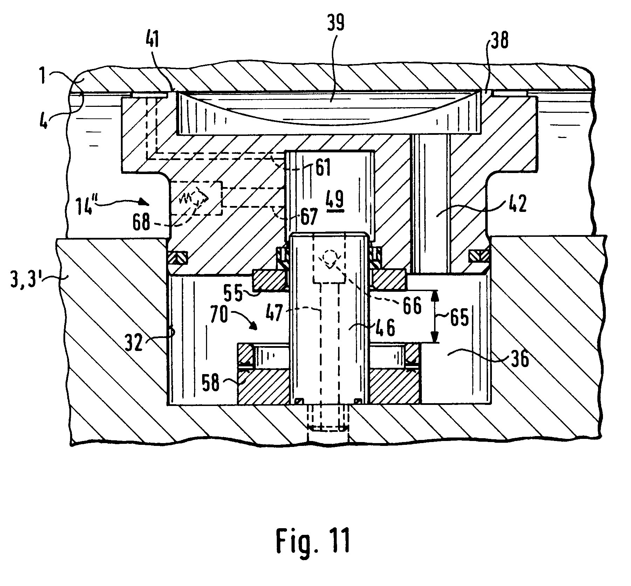

In Fig. 11 ist ein Dichtungsglied 14″ dargestellt, welches im wesentlichen dem Dichtungsglied 14' der Fig. 7 bis 10 entspricht und sich dadurch unterscheidet, daß in dem dem Zylinderraum 49 zugewandten Ende der Längsbohrung 47 des Kolbens 46 ein gegen den Zylinderraum 49 hin öffnendes Rückschlagventil 66 angeordnet ist, welches einen Rückstrom von Druckflüssigkeit durch die Längsbohrung 47 gegen die Pumpe hin unmöglich macht. Außerdem ist ein von der Zylinderkammer 49 nach außen, d.h. in den Zwischenraum zwischen der Hohlwalze 1 und dem Querhaupt 3,3', führender Kanal 67 vorgesehen, in welchem ein nach außen öffnendes Rückschlagventil 68 angeordnet ist, welches auf einen vorbestimmten Öffnungsdruck von beispielsweise 40 bar vorgespannt ist.

Durch das Rückschlagventil 66 wird das Dichtungsglied 14' bei einer Absenkbewegung der Hohlwalze 1 gemäß Fig. 11 "härter", weil die Druckflüssigkeit aus dem Zylinderraum 49 an sich nur durch die Drosselleitungen 61 in die in Fig. 11 nicht dargestellten Randkammern entweichen kann. Damit trotz des Rückschlagventils 66 die Anfangs-Totgangstrecke 65 wirksam bleibt und eine Schnellüftung des Walzspalts möglich ist, ist das zweite Rückschlagventil 68 vorgesehen, welches, wenn das gesamte Gewicht der Hohlwalze 1 auf dem Zylinderraum 49 lastet und der Druck darin entsprechend ansteigt, so daß der Öffnungsdruck des Rückschlagventils 68 überschritten wird, eine rasche Entleerung des Zylinderraums 49 und damit ein entsprechend rasches Absacken der Hohlwalze 1 gestattet. Das Rückschlagventil 66 ist unmittelbar am Zylinderraum 49 angeordnet, weil dadurch die Verhärtungswirkung am besten ist und die Dämpfungswirkung des auf der Anlagefläche 41 des Randes 38 der Druckkammer 39 bestehenden Flüssigkeitsfilms am wirkungsvollsten ins Spiel gebracht wird.

## Patentansprüche

1. Walze mit steuerbarem Liniendruck, welche eine den arbeitenden Walzenumfang bildende umlaufende Hohlwalze (1) und ein diese der Länge nach durchgreifendes, rundum Abstand vom Innenumfang der Hohlwalze (1) belassendes undrehbares Querhaupt (3, 3') und über die Länge der Hohlwalze (1) verteilt in radialen Zylindersackbohrungen (32) des Querhaupts (3, 3') kolbenartige Dichtungsglieder (14) umfaßt, die eine dem Innenumfang (4) der Hohlwalze (1) in der Form angepaßte Anlagefläche (41), die durch einen eine gegen den Innenumfang (4) der Hohlwalze (1) offene hydrostatische Druckkammer (39) ringsum geschlossen umgrenzenden Rand (38) gebildet ist und mit Abstand von der Mitte der Druckkammer mindestens zwei weitere gegen den Innenumfang der Hohlwalze offene, von der hydrostatischen Druckkammer getrennte Randkammern (50, 60) aufweisen, wobei Druckkammer (39) und die Randkammern (50, 60) an voneinander getrennte Kanäle (42, 51) angeschlossen sind und in dem Querhaupt (3, 3') mindestens zwei getrennte Zuleitungen (16', 26' bzw. 16″, 26″) für Druckflüssigkeit vorhanden sind, von denen eine in die zwischen dem Dichtungsglied (14) und dem Boden (35) der Zylindersackbohrung (32) gebildete Zylinderkammer (36) mündet und die andere mit dem Zylinderraum (49) einer zur Achse der Zylindersackbohrung (32) parallelen, jedoch einen wesentlich kleineren Querschnitt aufweisenden Kolben/Zylindereinheit in Verbindung steht, von der ein Teil am Boden der Zylindersackbohrung (32), der andere Teil am Dichtungsglied (14) ausgebildet ist, dadurch gekennzeichnet, daß der zu der Druckkammer (39) führende Kanal (42) drosselfrei ausgeführt ist und in die Zylinderkammer (36) mündet und die zu den Randkammern (50, 60) führenden Kanäle (51, 61) drosselnd ausgeführt sind und in den Zylinderraum (49) münden.

2. Walze nach Anspruch 1, dadurch gekennzeichnet, daß mindestens drei über den Umfang gleichmäßig verteilte getrennt über drosselnde Kanäle (51) aus dem Zylinderraum (49) versorgte Randkammern (50, 60) vorhanden sind.

3. Walze nach Anspruch 1 oder 2, dadurch gekennzeichnet, daß die Randkammern (50) in dem die Druckkammer (3) umgrenzenden Rand (38) ausgebildet sind.

4. Walze nach Anspruch 1 oder 2, dadurch gekennzeichnet, daß die Randkammern (60) getrennt von dem die Druckkammer (39) umgrenzenden Rand (38) angeordnet sind.

5. Walze nach Anspruch 4, dadurch gekennzeichnet, daß die Randkammern (60) radial außerhalb des die Druckkammer (39) umgrenzenden Randes (38) angeordnet sind.

6. Walze nach einem der Ansprüche 1 bis 5, dadurch gekennzeichnet, daß der Wirkungsquerschnitt der Druckkammer (39) gleich dem Wirkungsquerschnitt der Zylindersackbohrung (32) ist.

7. Walze nach einem der Ansprüche 1 bis 5, dadurch gekennzeichnet, daß der Wirkungsquerschnitt der Druckkammer (39) bis zu 5 % größer als der Wirkungsquerschnitt der Zylindersackbohrung (32) ist.

8. Walze nach einem der Ansprüche 1 bis 7, dadurch gekennzeichnet, daß bei einer Walze mit innerem Hub eine Dämpfungseinrichtung vorgesehen ist, mittels deren die Absenkbewegung der Hohlwalze (1) gegen das Querhaupt (3, 3') bremsbar ist.

9. Walze nach Anspruch 8, dadurch gekennzeichnet, daß die Dämpfungseinrichtung (70) eine Anfangs-Totgangstrecke (65) aufweist.

10. Walze nach Anspruch 8 oder 9, dadurch gekennzeichnet, daß das Dichtungsglied (14, 14', 14'') auf der Oberseite des Querhaupts (3, 3') angeordnet und die Dämpfungseinrichtung (70) in das Dichtungsglied (14, 14' 14'') integriert ist.

11. Walze nach Anspruch 9 oder 10, dadurch gekennzeichnet, daß die Dämpfungseinrichtung einen in einem in der Zylinderkammer (36) angeordneten, bei der Absenkbewegung der Hohlwalze (1) gegen das Querhaupt (3, 3') in einen gegen die Zylinderkammer (36) nach oben zunächst offenen Zylinder (58) eintauchenden Kolben (55) umfaßt und die Abströmwege der aus dem Zylinder (58) verdrängten Druckflüssigkeit gedrosselt sind.

12. Walze nach einem der Ansprüche 1 bis 11, dadurch gekennzeichnet, daß in dem dem Zylinderraum (49) benachbarten Endbereich (47) des von der Pumpe zu dem Zylinderraum (49) führenden Kanals (16'', 26'') ein nach außen schließendes Rückschlagventil (66) angeordnet ist.

13. Walze nach Anspruch 12, dadurch gekennzeichnet, daß ein von dem Zylinderraum (49) in den Zwischenraum (6) zwischen Hohlwalze (1) und Querhaupt (3, 3') führender Kanal (67) vorgesehen ist, in welchem ein bis zu einem vorbestimmten Öffnungsdruck vorgespanntes, nach außen öffnendes Rückschlagventil (68) angeordnet ist.

**Claims**

1. A roll having an adjustable line pressure and comprising a peripheral roll shell (1) constituting the working roll surface, a non-rotatable beam (3, 3') extending longitudinally through the shell (1) and leaving an annular space between it and the inner surface of the shell, and piston-like sealing elements (14) in radial cylindrical blind bores (32) in the beam (3, 3') distributed along the roll shell (1), the sealing elements (14) having a bearing surface (41) adapted in shape to the inner surface (4) of the roll shell (1) and formed by a peripheral edge (38) open towards the inner surface (4) of the roll shell (1) and closed around hydrostatic pressure chambers (39) and also comprising at least two edge chambers (50, 60) at a distance from the centre of the pressure chambers and open towards the inner surface of the roll shell and separate from the hydrostatic pressure chambers, the pressure chambers (39) and the edge chambers (50, 60) being connected to ducts (42, 51) separate from one another and at least two separate feed pipes (16', 26' and 16'', 26'') for pressure fluid being present in the beam (3, 3'), one pipe opening into the cylinder chamber (36) formed between the sealing element (14) and the base (35) of the cylindrical blind bore (32) and the other being connected to the cylinder space (49) of a piston/cylinder unit parallel to the axis of the cylindrical blind bore (32) but having a substantially smaller cross-section, one part of the cylinder/piston unit being formed in the base of the cylindrical blind bore (32) and the other in the sealing element (14), characterised in that the duct (42) leading to the pressure chamber (39) is throttle-free and opens into the cylinder chamber (36) and the ducts (51, 61) leading to the edge chambers (50, 60) are throttled and open into the cylinder space (49).

2. A roll according to claim 1, characterised in that at least three edge chambers (50, 60) uniformly distributed around the periphery and separately supplied through throttled ducts (51) from the cylinder space (49) are present.

3. A roll according to claim 1 or 2, characterised in that the edge chambers (50) are formed in the edge (38) surrounding the pressure chamber (3).

4. A roll according to claim 1 or 2, characterised in that the edge chambers (60) are disposed separately from the edge (38) surrounding the pressure chamber (39).

5. A roll according to claim 4, characterised in that the edge chambers (60) are disposed radially outside the edge (38) surrounding the pressure chamber (39).

6. A roll according to any of claims 1 to 5, characterised in that the effective cross-section of the pressure chamber (39) is equal to the effective cross-section of the cylindrical blind bore (32).

7. A roll according to any of claims 1 to 5, characterised in that the effective cross-section of the pressure chamber (39) is up to 5% greater than the effective cross-section of the cylindrical blind bore (32).

8. A roll according to any of claims 1 to 7, characterised in that, in the case of a roll with an internal stroke, a damping device is provided for slowing down the downward motion of the roll shell (1) against the beam (3, 3').

9. A roll according to claim 8, characterised in that the damping device (70) has a free travel section (65).

10. A roll according to claim 8 or 9, characterised in that the sealing element (14, 14', 14'') is disposed on the top surface of the beam (3, 3') and the damping device (70) is incorporated in the sealing element (14, 14', 14'').

11. A roll according to claim 9 or 10, characterised in that the damping device comprises a piston (55) disposed in the cylinder chamber (36) and, during the downward motion of the roll shell (1) towards the beam (3' 3'), plunging into a cylinder (58) initially open upwards towards the cylinder chamber (36), and the paths for pressure fluid displaced from the cylinder (58) are throttled.

12. A roll according to any of claims 1 to 11, characterised in that an outwardly closing non-return valve (66) is disposed in the end region (47), adjacent the cylinder space (49), of the duct (16'', 26'') leading from the pump to the cylinder space (49).

13. A roll according to claim 12, characterised in that a duct (67) leading from the cylinder space (49) into the space (6) between the roll shell (1) and the beam (3, 3') is provided and contains an outwardly opening non-return valve (68) prestressed up to a predetermined opening pressure.

**Revendications**

1. Rouleau à pression réglable le long d'une ligne qui comprend un rouleau creux (1) tournant formant le pourtour de travail et une traverse (3, 3') qui ne peut pas tourner venant en prise selon la longueur avec le pourtour du rouleau en restant à distance du pourtour intérieur du rouleau creux (1) et des organes d'étanchéité (14) du type piston répartis sur la longueur du rouleau creux (1) dans des alésages radiaux borgnes cylindriques (32) radiant de la traverse (3, 3'), organes qui présentent une surface d'appui (41) adaptée par sa forme au pourtour intérieur (4) du rouleau creux (1), surface qui est formée par un bord (38) délimitant tout autour de façon fermée une chambre de pression (39) hydrostatique ouverte vers le pourtour intérieur (4) du rouleau creux (1) et à une certaine distance du milieu de la chambre de pression au moins deux autres chambres marginales (50, 60) ouvertes vers le pourtour intérieur du rouleau creux, séparées de la chambre de pression hydrostatique, tandis que la chambre de pression (39) et les chambres marginales (50, 60) sont raccordées à des canaux (42, 51) séparés les uns des autres et qu'il existe dans la traverse (3, 3') au moins deux conduites d'amenée séparées (16', 26' ou 16'', 26'') pour le liquide sous pression, dont l'une débouche dans la chambre cylindrique (36) formée entre l'organe d'étanchéité (14) et le fond (35) de l'alésage borgne cylindrique (32) et l'autre est en liaison avec l'espace cylindrique (49) d'une unité piston/cylindre parallèle à l'axe de l'alésage borne cylindrique (32), présentant toutefois une section transversale sensiblement plus petite, unité dont une partie est constituée sur le fond de l'alésage borgne cylindrique (32), l'autre partie sur l'organe d'étanchéité (14), rouleau caractérisé en ce que le canal (42) conduisant à la chambre de pression (39) est réalisé sans étranglement et débouche dans la chambre cylindrique (36) et les canaux (51, 61) conduisant aux chambres marginales (50, 60) sont réalisés avec étranglement et débouchent dans l'espace cylindrique (49).

2.  Rouleau selon la revendication 1, caractérisé en ce qu'il existe au moins trois chambres marginales (50, 60) alimentées à partir de l'espace cylindrique (49) par des canaux à étranglement (51) séparément, réparties uniformément sur le pourtour.

3.  Rouleau selon la revendication 1 ou 2, caractérisé en ce que les chambres marginales (50) sont constituées dans le bord (38) entourant la chambre pression (3).

4.  Rouleau selon la revendication 1 ou 2, caractérisé en ce que les chambres marginales (60) sont disposées en étant séparées par le bord (38) entourant la chambre de pression (39).

5.  Rouleau selon la revendication 4, caractérisé en ce que les chambres marginales (60) sont disposées radialement en dehors du bord (38) entourant la chambre de pression (39).

6.  Rouleau selon l'une des revendications 1 à 5, caractérisé en ce que la section transversale efficace de la chambre de pression (39) est égale à la section transversale efficace de l'alésage borgne cylindrique (32).

7.  Rouleau selon l'une des revendications 1 à 5, caractérisé en ce que la section transversale efficace de la chambre de pression (39) est jusqu'à 5% plus grande que la section transversale efficace de l'alésage borgne cylindrique (32).

8.  Rouleau selon l'une des revendications 1 à 7, caractérisé en ce que dans le cas d'un rouleau avec une course intérieure il est prévu un dispositif amortisseur, au moyen duquel on peut freiner le mouvement d'enfoncement du cylindre creux (1) vers la traverse (3, 3').

9.  Rouleau selon la revendication 8, caractérisé en ce que le dispositif amortisseur (70) présente un trajet à vide initial (65).

10. Rouleau selon la revendication 8 ou 9, caractérisé en ce que l'organe d'étanchéité (14, 14', 14") est disposé sur la face supérieure de la traverse (3, 3') et le dispositif amortisseur (70) est intégré dans l'organe d'étanchéité (14, 14', 14").

11. Rouleau selon la revendication 9 ou 10, caractérisé en ce que le dispositif amortisseur comprend un piston (55) plongeant dans un cylindre (58) disposé dans la chambre cylindrique (36), ouvert d'abord vers le haut contre la chambre cylindrique (36) lors du mouvement d'enfoncement du rouleau creux (1) vers la traverse (3, 3') et en ce que les trajets d'écoulement du liquide sous pression refoulé à partir du cylindre (58) sont étranglés.

12. Rouleau selon l'une des revendications 1 à 11, caractérisé en ce que dans la zone terminale (47) voisine de l'espace cylindrique (49) du canal (16", 26") conduisant de la pompe à l'espace cylindrique (49) est disposé un clapet de non retour (66) fermant vers l'extérieur.

13. Rouleau selon la revendication 12, caractérisé en ce qu'il est prévu un canal (67) conduisant de l'espace cylindrique (49) dans l'espace intermédiaire (6) entre le rouleau creux (1) et la traverse (3, 3'), canal (67) dans lequel est disposé un clapet de non retour (68) ouvrant vers l'extérieur, taré jusqu'à une pression d'ouverture prédéterminée.

Fig. 1

Fig. 3

Fig. 4

Fig. 2

Fig. 5

Fig. 6

Fig.7

Fig.8

Fig.9

Fig.10

EP 0 347 549 B1

Fig. 11

16